# EUROPEAN PATENT APPLICATION

(11) **EP 4 734 101 A1**
(43) Date of publication of application: **29.04.2026**
(21) Application number: 25209951.0
(22) Date of filing: 21.10.2025
(51) Int. Cl.: G09G 3/36

(54) **CHOLESTERIC LIQUID-CRYSTAL DISPLAY DEVICE AND METHOD FOR DRIVING THE SAME**

(30) Priority: 25.10.2024 US 202463711980 P; 29.09.2025 US 202519342969
(71) Applicant: Iris Optronics Co., Ltd., Tainan City 711010 (TW)
(72) Inventor: HO, Yu Sheng, Guiren Dist., Tainan City (TW); YAO, Cheng Hong, Guiren Dist., Tainan City (TW); LIAO, Chi Chang, Guiren Dist., Tainan City (TW)
(74) Representative: Vossius & Partner Patentanwälte Rechtsanwälte mbB

(57) **Abstract**

A method for driving a cholesteric liquid-crystal display device is provided. The cholesteric liquid-crystal display device includes a cholesteric liquid-crystal display panel and a driving circuit section. The cholesteric liquid-crystal display panel includes a plurality of scanning electrodes and a plurality of data electrodes. The method includes the following steps: utilizing the driving circuit section to sequentially activate each of the scanning electrodes using a pulse-width modulation (PWM) scanning procedure, which comprises a selection stage and a non-selection stage; and during the selection stage of each pixel circuit on an activated scanning electrode among the plurality of scanning electrodes, utilizing the driving circuit section to add one or more first additional voltage pulses and one or more second additional voltage pulses to a negative half cycle and a positive half cycle of a common AC voltage pulse applied to each pixel circuit on the activated scanning electrode, respectively.

## Description

### CROSS REFERENCE TO RELATED APPLICATION

This application claims the benefit of U.S. Provisional Application No. 63/711,980 filed on October 25, 2024, the entirety of which is incorporated by reference herein.

### TECHNICAL FIELD

The present disclosure relates to display devices, and in particular, to a cholesteric liquid-crystal display device and method for driving the same.

### DESCRIPTION OF THE RELATED ART

A cholesteric liquid crystal display (Ch-LCD) possesses bi-stable properties, allowing it to retain displayed content without power consumption. The planar state and focal conic state are both stable, meaning that when the applied voltage is deactivated, the molecular state and displayed images remain unchanged. Voltage is solely applied when it is necessary to transition the cholesteric crystal liquid molecules to a different state or refresh the displayed images. As a result, cholesteric liquid crystal display devices have become popular in temperature sensor displays, e-books, e-paper, electronic whiteboards, and various other products.

### SUMMARY

In an aspect of the present disclosure, a display device is provided, which includes a cholesteric liquid-crystal display panel. The cholesteric liquid-crystal display panel includes a first substrate on which a plurality of scanning electrodes extending in a first direction are formed; a second substrate on which a plurality of data electrodes extending in a second direction different from the first direction are formed; a cholesteric liquid-crystal layer formed between the first substrate and the second substrate; and a driving circuit section, configured to apply a plurality of alternating-current (AC) voltage pulses to pixel circuits at intersections between the scanning electrodes and the data electrodes. The driving circuit section is configured to sequentially activate each of the scanning electrodes using a pulse-width modulation (PWM) scanning procedure, which includes a selection stage and a non-selection stage. During the selection stage of each pixel circuit on an activated scanning electrode among the plurality of scanning electrodes, the driving circuit section is configured to add one or more first additional voltage pulses and one or more second additional voltage pulses to a negative half cycle and a positive half cycle of a common AC voltage pulse applied to each pixel circuit on the activated scanning electrode, respectively.

In another aspect of the present disclosure, a method for driving a cholesteric liquid-crystal display device is provided. The cholesteric liquid-crystal display device includes a cholesteric liquid-crystal display panel and a driving circuit section. The cholesteric liquid-crystal display panel includes a plurality of scanning electrodes and a plurality of data electrodes. The method includes the following steps: utilizing the driving circuit section to sequentially activate each of the scanning electrodes using a pulse-width modulation (PWM) scanning procedure, which comprises a selection stage and a non-selection stage; and during the selection stage of each pixel circuit on an activated scanning electrode among the plurality of scanning electrodes, utilizing the driving circuit section to add one or more first additional voltage pulses and one or more second additional voltage pulses to a negative half cycle and a positive half cycle of a common AC voltage pulse applied to each pixel circuit on the activated scanning electrode, respectively.

### BRIEF DESCRIPTION OF THE DRAWINGS

Aspects of the present disclosure are best understood from the following detailed description when read with the accompanying figures. It is noted that in accordance with the standard practice in the industry, various features are not drawn to scale. In fact, the dimensions of the various features may be arbitrarily increased or reduced for clarity of discussion.
FIG. 1 is a block diagram of an electronic device in accordance with an embodiment of the present disclosure.
FIG. 2A is a diagram of the display device in accordance with the embodiment of FIG. 1.
FIG. 2B is a cross section of the display panel in FIG. 2A.
FIG. 3A is a waveform diagram illustrating a data voltage VDATA, common voltage VCOM, and sensed voltage VSENSE for writing a bright pixel value in accordance with some embodiments of the present disclosure.
FIG. 3B is a waveform diagram illustrating a data voltage VDATA, common voltage VCOM, and sensed voltage VSENSE for writing a dark pixel value in accordance with some embodiments of the present disclosure.
FIG. 4A is a diagram illustrating curves of dark-state reflectance vs. scan time, using different combinations of AC voltages sensed by the ChLC molecule within a specific pixel circuit, in accordance with some embodiments of the present disclosure.
FIG. 4B is a diagram illustrating curves of bright-state reflectance vs. scan time, using different combinations of AC voltages sensed by the ChLC molecule within a specific pixel circuit, in accordance with some embodiments of the present disclosure.
FIG. 4C is a diagram illustrating curves of the contrast ratio vs. scan time, using different combinations of AC voltages sensed by the ChLC molecule within a specific pixel circuit, in accordance with some embodiments of the present disclosure.
FIG. 5 is a waveform diagram illustrating a data voltage VDATA, common voltage VCOM, and sensed voltage VSENSE for writing a pixel value in accordance with some embodiments of the present disclosure.
FIGS. 6A to 6D are waveform diagrams illustrating a data voltage VDATA, common voltage VCOM, and sensed voltage VSENSE for writing a pixel value with different arrangements of additional voltage pulses, in accordance with some embodiments of the present disclosure.
FIG. 7 is a flowchart of a method for driving a cholesteric liquid-crystal display device in accordance with some embodiments of the present disclosure.

### DETAILED DESCRIPTION

The following disclosure provides many different embodiments, or examples, for implementing different features of the provided subject matter. Specific examples of operations, components, and arrangements are described below to simplify the present disclosure. These are, of course, merely examples and are not intended to be limiting. For example, a first operation performed before or after a second operation in the description may include embodiments in which the first and second operations are performed together, and may also include embodiments in which additional operations may be performed between the first and second operations. For example, the formation of a first feature over, on or in a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Time relative terms, such as "prior to," "before," "posterior to," "after" and the like, may be used herein for ease of description to describe the relationship of one operation or feature to another operation(s) or feature(s) as illustrated in the figures. Such time relative terms are intended to encompass different sequences of the operations depicted in the figures. Further, spatially relative terms, such as "beneath," "below," "lower," "above," "upper" and the like, may be used herein for ease of description to describe the relationship of one element or feature to another element(s) or feature(s) as illustrated in the figures. Such spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. Relative terms for connections, such as "connect," "connected," "connection," "couple," "coupled," "in communication," and the like, may be used herein for ease of description to describe an operational connection, coupling, or linking one between two elements or features. The relative terms for connections are intended to encompass different connections, couplings, or linkings of the devices or components. The devices or components may be directly or indirectly connected, coupled, or linked to one another through, for example, another set of components. The devices or components may be connected, coupled, or linked with each other by wire and/or wirelessly.

As used herein, the singular terms "a," "an," and "the" may include plural referents unless the context clearly indicates otherwise. For example, reference to a device may include multiple devices unless the context clearly indicates otherwise. The terms "comprising" and "including" may indicate the existences of the described features, integers, steps, operations, elements, and/or components, but may not exclude the existence of combinations of one or more of the features, integers, steps, operations, elements, and/or components. The term "and/or" may include any or all combinations of one or more listed items.

Additionally, amounts, ratios, and other numerical values are sometimes presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified.

The nature and use of the embodiments are discussed in detail as follows. It should be appreciated, however, that the present disclosure provides many applicable inventive concepts that can be embodied in a wide variety of specific contexts. The specific embodiments discussed are merely illustrative of specific ways to embody and use the disclosure, without limiting the scope thereof.

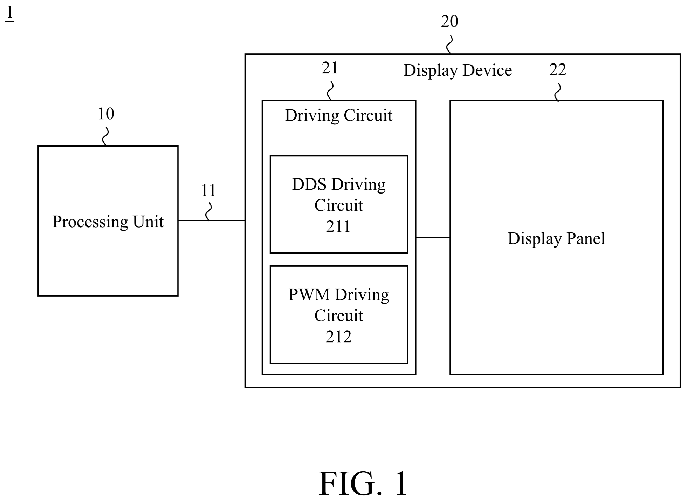

FIG. 1 is a block diagram of an electronic device in accordance with an embodiment of the present disclosure.

In some embodiments, the electronic device 1 may be an E-book, and E-paper, an electronic whiteboard, a temperature display board, etc., but the present disclosure is not limited thereto. As depicted in FIG. 1, the electronic device 1 may include a processing unit 10 and a display device 20 electrically connected to the processing unit 10 through bus 11. The processing unit 10 may be a central processing unit (CPU), a digital signal processor (DSP), an image signal processor (ISP), a microprocessor, a microcontroller unit (MCU), or any other equivalent circuit, but the present disclosure is not limited thereto. The display device 20 may be cholesteric liquid-crystal display (ChLCD) device.

In some embodiments, the display device 20 may include a driving circuit 21 and a display panel 22. The display panel 22 may be a ChLCD panel which includes multiple ChLC layers for red, green, and blue pixel arrays. Additionally, the driving circuit 21 may include a dynamic driving scheme (DDS) driving circuit 211 and a pulse width modulation (PWM) driving circuit 212. In some embodiments, one of the DDS driving circuit 211 and the PWM driving circuit 212 is used to drive the display panel 22. In other words, the display panel 22 can be driven either in a DDS driving mode or a PWM driving mode, depending on the driving mode selected by the driving circuit 21.

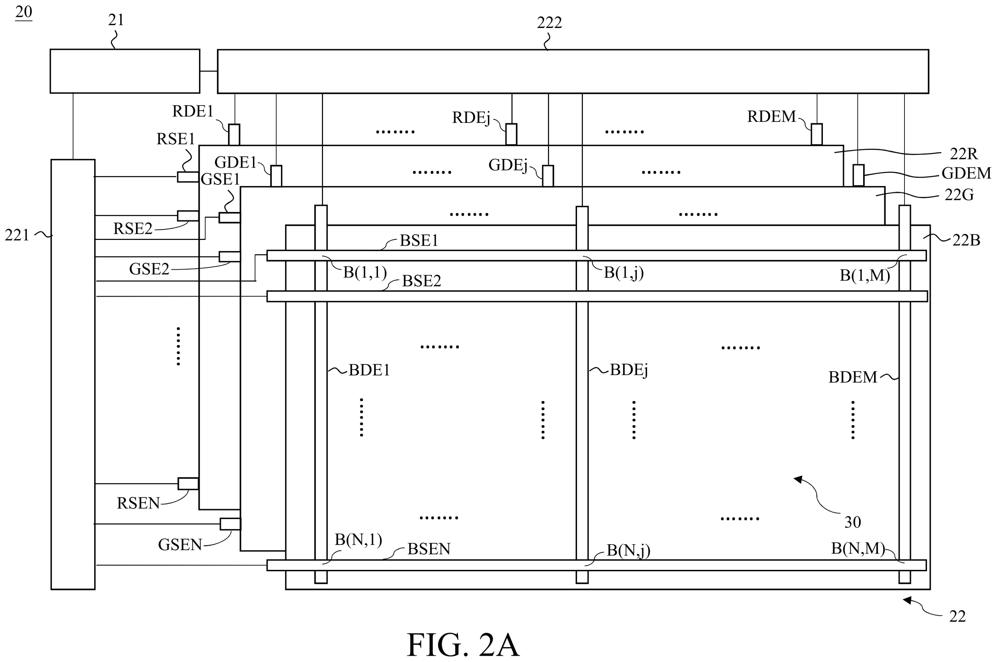

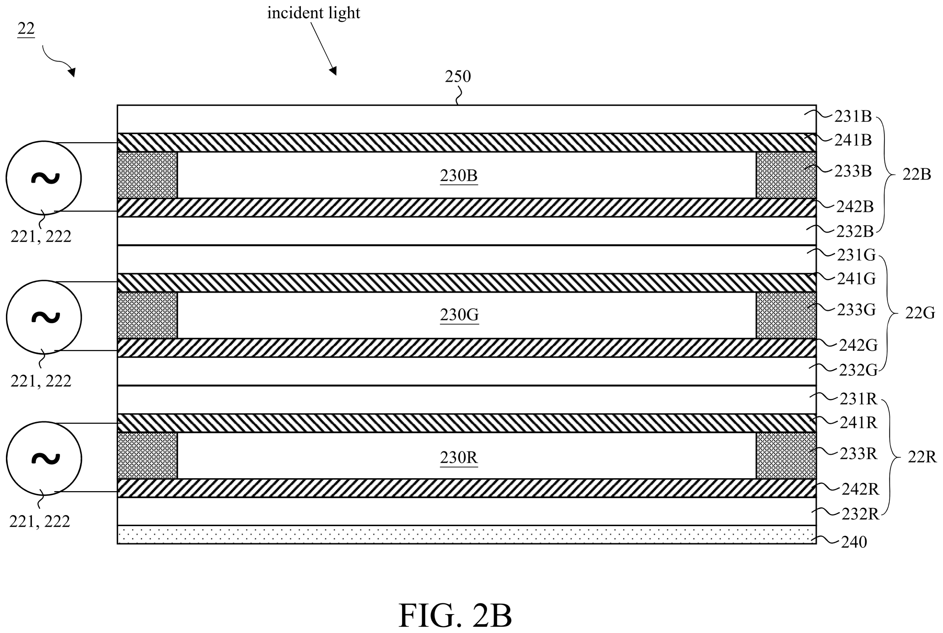

FIG. 2A is a diagram of the display device in accordance with the embodiment of FIG. 1. FIG. 2B is a cross section of the display panel in FIG. 2A.

In some embodiments, the display panel 22 may include a plurality of display units 22B, 22G, and 22R, a scanning electrode driving circuit 221, and a data electrode driving circuit 222, as depicted in FIG. 2A. Additionally, the display units 22B, 22G, and 22R can be stacked to form the display panel 22, with the display units 22B, 22G, and 22R being the topmost, middle, and bottom display units, respectively, as shown in FIG. 2B. The display units 22B, 22G, and 22R may include pixels that display blue, green, and red colors, respectively, allowing the display panel 22 to render a screen 30 (e.g., a color display screen). The display unit 22B may include scanning electrodes BSE1 to BSEN (e.g., N electrodes along the Y-axis) and data electrodes BDE1 to BDEM (e.g., M electrodes along the X-axis). The scanning electrodes and data electrodes in the display units 22G and 22R are arranged in a similar manner.

In some embodiments, the scanning electrodes BSE1 to BSEN can be referred to as common (COM) electrodes, and the data electrodes BDE1 to BDEM can be referred to as segment (SEG) electrodes. Furthermore, the scanning electrodes BSE1 to BSEN and the data electrodes BDE1 to BDEM intersect in the top view of the display panel 22, as depicted in FIG. 2A.

In some embodiments, a pixel circuit (e.g., a ChLC pixel circuit, not explicitly shown in FIG. 2A) is disposed at each intersection between the scanning electrodes BSE1 to BSEN and data electrodes BDE1 to BDEM within the display unit 22B. This arrangement allows the pixel circuits within the display unit 22B to form a blue pixel array with a resolution of M*N. For example, the pixel circuit located at the intersection between the scanning electrode BSE1 and the data electrode BDE1 within the display unit 22B (e.g., for blue color) can be assigned the coordinates B(1, 1), while the pixel circuit at the intersection between the scanning electrode BSEN and the data electrode BDEj within the display unit 22B can be assigned the coordinates B(N, j), and so on.

Referring to FIG. 2B, in some embodiments, the display units 22B, 22G, and 22R may be laminated in this order on a surface (e.g., surface 250) of incident light. The display unit 22B may include a liquid-crystal layer 230B, substrates 231B and 232B, layers 241B and 242B, and sealing materials 233B. For example, the liquid-crystal layer 230B may be a cholesteric liquid-crystal (ChLC) layer which is sealed between the substrates 231B and 232B opposite to each other by the sealing material 233B applied onto the edges of the substrates 231B and 232B. Additionally, the average refractive index n and the helical pitch p of liquid-crystal layer 230B are determined such that, for example, the wavelength λ is approximately 480 nm. The average refractive index n can be adjusted by selecting a liquid-crystal material and a chiral material, and the helical pitch p can be adjusted by adjusting the content of the chiral material. Accordingly, the liquid-crystal layer 230B may selectively reflect blue light in a planar state. The layers 241B and 242B may refer to regions on which the scanning electrodes BSE1 to BSEN and data electrodes BDE1 to BDEM within the display unit 22B are disposed, that are electrically connected to the scanning electrode driving circuit 221 and the data electrode driving circuit 222, respectively. Furthermore, in the focal conic state, the liquid-crystal molecules within the liquid-crystal layer 230B are disorderly rotated of the electrodes (e.g., layers 241B and 242B) to form helical structures, and the helical axes of the helical structures are randomly orientated (e.g., layers 241B and 242B). As a result, the selectivity of the liquid-crystal layer 230B with respect to a reflection wavelength is lost, and the liquid-crystal layer 230B transmits most of incident light. The transmitted light is absorbed by a light absorbing layer 240 whereby dark (black) display is achieved. The light absorbing layer 240 may be provided on the bottom surface of the display unit 22R.

Similarly, the display unit 22G may include a liquid-crystal layer 230G, substrates 231G and 232G, layers 241G and 242G, and sealing materials 233G. For example, the liquid-crystal layer 230G may be a cholesteric liquid-crystal (ChLC) layer which is sealed between the substrates 231G and 232G (e.g., transparent substrates) opposite to each other by the sealing material 233G applied onto the edges of the substrates 231G and 232G. Additionally, the average refractive index n and the helical pitch p of liquid-crystal layer 230G are determined such that, for example, the wavelength λ is approximately 550 nm, allowing the liquid-crystal layer 230G to selectively reflect green light in a planar state. Similarly, although the scanning electrodes (e.g., GSE1 to GSEN) and data electrodes (e.g., GDE1 to GDEM) within the display unit 22G are not explicitly shown in FIGs. 2A and 2B, the layers 241G and 242G may refer to regions on which these scanning electrodes GSE1 to GSEN and data electrodes GDE1 to GDEM within the display unit 22G are disposed, that are electrically connected to the scanning electrode driving circuit 221 and the data electrode driving circuit 222, respectively.

Moreover, the display unit 22R may include a liquid-crystal layer 230R, substrates 231R and 232R, layers 241R and 242R, and sealing materials 233R. For example, the liquid-crystal layer 230R may be a cholesteric liquid-crystal (ChLC) layer which is sealed between the substrates 231R and 232R (e.g., transparent substrates) opposite to each other by the sealing material 233R applied onto the edges of the substrates 231R and 232R. Additionally, the average refractive index n and the helical pitch p of liquid-crystal layer 230R are determined such that, for example, the wavelength λ is approximately 700 nm, allowing the liquid-crystal layer 230R to selectively reflect red light in a planar state. Similarly, although the scanning electrodes (e.g., RSE1 to RSEN) and data electrodes (e.g., RDE1 to RDEM) within the display unit 22G are not explicitly shown in FIGs. 2A and 2B, the layers 241R and 242R may refer to regions on which these scanning electrodes RSE1 to RSEN and data electrodes RDE1 to RDEM within the display unit 22R are disposed, that are electrically connected to the scanning electrode driving circuit 221 and the data electrode driving circuit 222, respectively. The operations of the ChLC molecules within the liquid-crystal layers 230G and 230R in the planar state and focal conic states may be similar to those within the liquid-crystal layer 230B, and thus details thereof are not be repeated here.

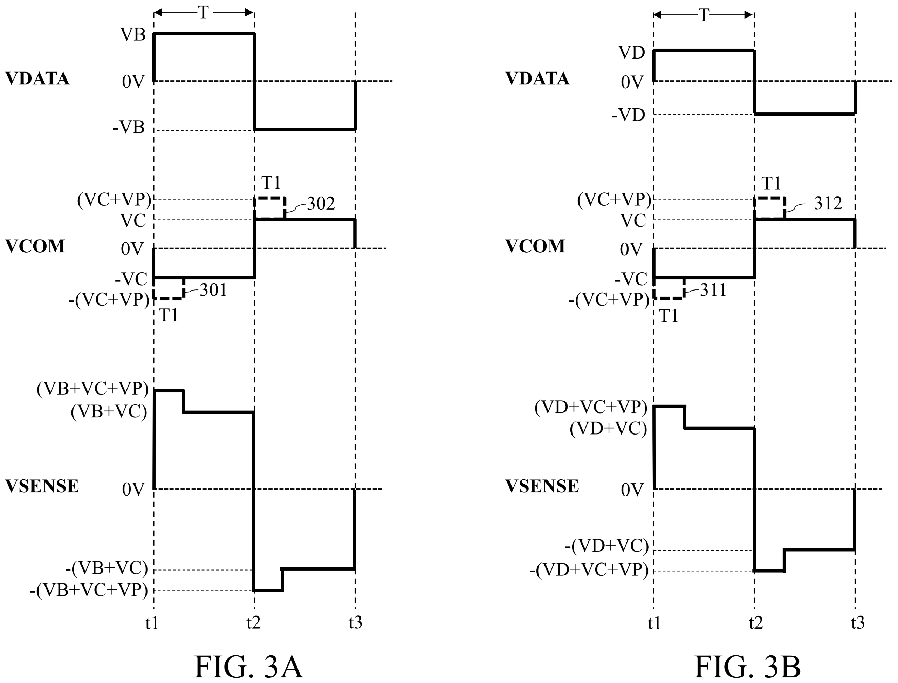

FIG. 3A is a waveform diagram illustrating a data voltage VDATA, common voltage VCOM, and sensed voltage VSENSE for writing a bright pixel value in accordance with some embodiments of the present disclosure.

In some embodiments, the PWM scanning procedure of an activated scanning electrode includes a selection phase and a non-selection phase arranged in sequence. During the selection phase of the conventional PWM scanning procedure, when writing a bright pixel value (e.g., pixel value =255) to a specific pixel circuit on the activated scanning electrode, the data voltage VDATA includes an alternating-current (AC) voltage pulse with a bright-state voltage amplitude VB. Concurrently, the common voltage VCOM includes another AC voltage pulse with a common voltage amplitude VC. This indicates that the data voltage VDATA alternates between voltages +VB and -VB, and the common voltage VCOM alternates between voltages +VC and -VC within a single cycle between times t1 and t3. Accordingly, the AC voltage VSENSE sensed by the ChLC molecule within the specific pixel circuit, which can be calculated by subtracting the common voltage VCOM from the data voltage VDATA (i.e., VDATA - VCOM), alternates between voltages (VB+VC) and -(VB+VC). In some embodiments, the voltage amplitudes VB and VC may be 18.9V, respectively, indicating that the AC voltage VSENSE sensed by the ChLC molecule within the specific pixel circuit alternates between approximately +37.8V and -37.8V during the selection phase of the conventional PWM scanning procedure. It should be noted that the voltage amplitudes VB and VC are for purposes of description, and they can be adjusted according to practical needs.

In some embodiments, additional voltage pulses 301 and 302, each with a voltage amplitude VP, are added to the negative and positive half cycles within the AC pulse of the common voltage VCOM applied to the activated scanning electrode, respectively, as shown in FIG. 3A. This indicates that the additional voltage pulses 301 and 302 are superimposed on (or appended to) the negative and positive half cycles within the common AC voltage pulse, respectively, resulting in a higher overall voltage amplitude of the common voltage during the time period T1 of each additional voltage pulses 301 and 302. The time period T1 of each additional voltage pulses 301 and 302 is equal, which is less than the half-cycle duration (e.g., duration T) of an AC pulse of the common voltage VCOM. Accordingly, the common voltage VCOM exhibits a higher voltage amplitude of (VC+VP) with the periods T1 of the additional pulses 301 and 302, and a lower voltage amplitude of VC during the remaining portion of one cycle of the AC pulse. Since the AC voltage VSENSE sensed by the ChLC molecule within the specific pixel circuit can be calculated as VDATA - VCOM, it follows that the sensed voltage VSENSE exhibits a higher voltage amplitude of (VB+VC+VP) with the periods T1 of the additional pulses 301 and 302, and a lower voltage amplitude of (VB+VC) during the remaining portion of one cycle of the AC pulse. It should be noted that the voltage amplitude VP can be set within a predefined range, such as 0.1V to 20V, but the present disclosure is not limited thereto. It should be noted that since the data electrodes (e.g., BDE1 to BDEM) and the scanning electrodes (e.g., BSE1 to BSEN) intersect, it is preferred not to add the additional voltage pulses to the AC pulse of the data voltage VDATA on each data electrode, as this may cause interference with the common voltage VCOM applied to each scanning electrode. Instead, as proposed in the disclosure, the additional voltage pulses are added to the AC pulse of the common voltage VCOM applied to the activated scanning electrode, eliminating the aforementioned interference issue.

Specifically, during the selection phase of the proposed PWM scanning procedure, when a bright pixel value (e.g., pixel value = 255) is to be written to a specific pixel circuit on the activated scanning electrode, the additional pulses 301 and 302 added to the negative and positive half cycles of the original AC pulse of the common voltage VCOM can introduce an increased voltage amplitude to expedite the pixel writing process, enabling the specific pixel circuit to achieve the expected bright pixel value in a shorter time or achieve a higher bright pixel value with increased reflectance of the ChLC molecule of the specific pixel circuit within a predefined duration, as compared to the selection phase of the conventional PWM scanning procedure.

FIG. 3B is a waveform diagram illustrating a data voltage VDATA, common voltage VCOM, and sensed voltage VSENSE for writing a dark pixel value in accordance with some embodiments of the present disclosure.

The waveforms of the data voltage VDATA, common voltage VCOM, and sensed voltage VSENSE shown in FIG. 3B may be similar to those shown in FIG. 3A, with the difference being that the AC pulse of the data voltage VDATA has a dark-state voltage amplitude VD for writing a dark pixel value (e.g., pixel value = 0) to the specific pixel circuit. Additionally, the common voltage VCOM exhibits a higher voltage amplitude of (VC+VP) within periods T1 of the additional pulses 311 and 312, and a lower voltage amplitude of VC during the remaining portion of one cycle of the AC pulse. Since the AC voltage VSENSE sensed by the ChLC molecule within the specific pixel circuit can be calculated as VDATA - VCOM, it follows that the sensed voltage VSENSE exhibits a higher voltage amplitude of (VD+VC+VP) within periods T1 of the additional pulses 311 and 312, and a lower voltage amplitude of (VD+VC) during the remaining portion of one cycle of the AC pulse. In some embodiments, the voltage amplitudes VD and VC may be 8.9V and 18.9V, respectively, indicating that the AC voltage VSENSE sensed by the ChLC molecule within the specific pixel circuit alternates between approximately +27.8V and -27.8V during the selection phase of the conventional PWM scanning procedure. It should be noted that the voltage amplitudes VD and VC are for purposes of description, and they can be adjusted according to practical needs.

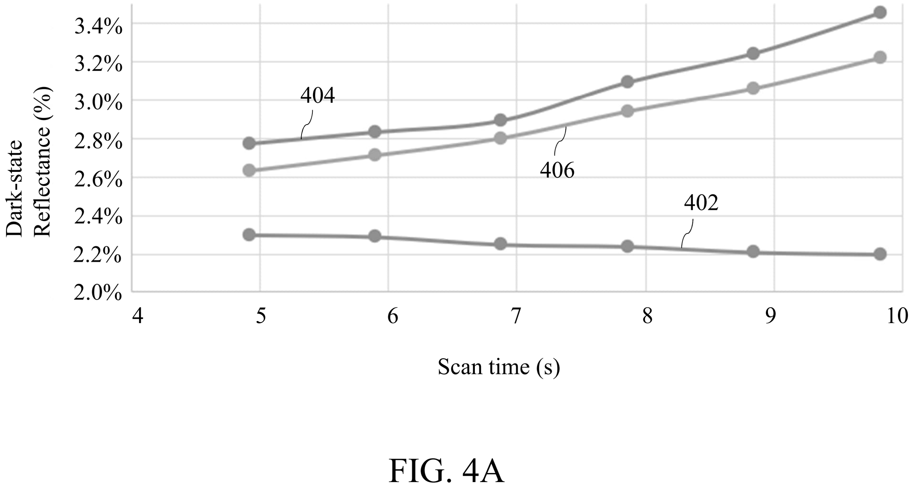

Specifically, during the selection phase of the proposed PWM scanning procedure, when a dark pixel value (e.g., pixel value = 0) is to be written to a specific pixel circuit on the activated scanning electrode, the additional pulses 311 and 312 added to the original AC pulse of the common voltage VCOM can also introduce an increased voltage amplitude to expedite the pixel writing process, enabling the specific pixel circuit to achieve the expected dark pixel value more rapidly than during the selection phase of the conventional PWM scanning procedure. It should be noted that the proposed technique could slightly raise the dark pixel value of the specific pixel circuit with increased reflectance of the ChLC molecule of the specific pixel circuit within a predefined duration, but the overall contrast ratio of the bright pixel value to the dark pixel value of the specific pixel circuit can be increased. The details thereof are described with reference to FIGs. 4A to 4C.

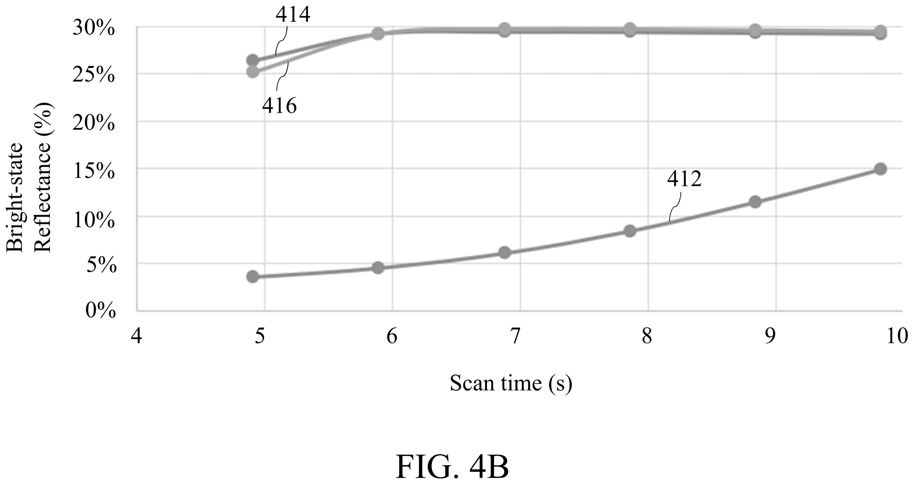

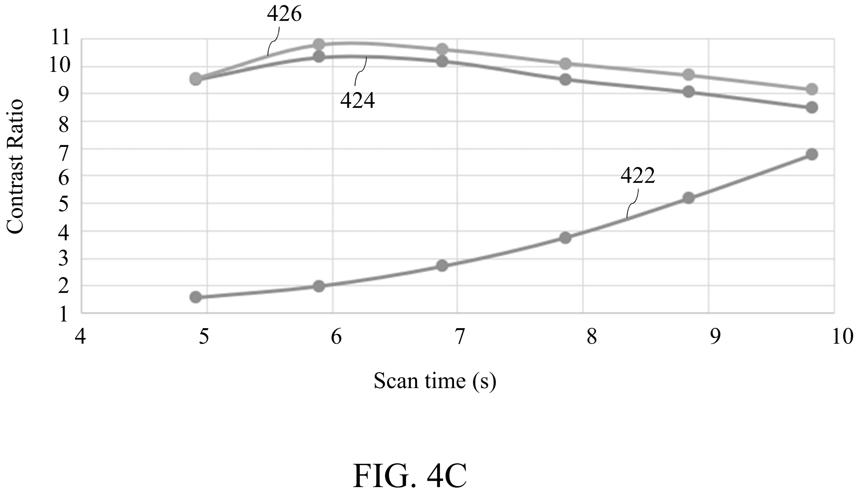

FIG. 4A is a diagram illustrating curves of dark-state reflectance vs. scan time, using different combinations of AC voltages sensed by the ChLC molecule within a specific pixel circuit, in accordance with some embodiments of the present disclosure. FIG. 4B is a diagram illustrating curves of bright-state reflectance vs. scan time, using different combinations of AC voltages sensed by the ChLC molecule within a specific pixel circuit, in accordance with some embodiments of the present disclosure. FIG. 4C is a diagram illustrating curves of the contrast ratio vs. scan time, using different combinations of AC voltages sensed by the ChLC molecule within a specific pixel circuit, in accordance with some embodiments of the present disclosure.

For purposes of description, three distinct PWM scanning procedures are used for a ChLC display panel with an XGA resolution (e.g., 1024*768). In some embodiments, the first PWM scanning procedure utilizes an AC voltage pulse with a relatively lower voltage amplitude (i.e., no additional voltage pulses) to write a dark pixel value or a bright pixel value to the specific pixel circuit during the selection phase. The resulting dark-state reflectance, bright-state reflectance, and contrast ratio of the ChLC molecule within the specific pixel circuit versus the scan time are shown by curves 402, 412, and 422 in FIGs. 4A, 4B, and 4C, respectively. For example, the voltage amplitude of the AC voltage VSENSE sensed by the ChLC molecule within the specific pixel circuit written with a dark pixel value (e.g., pixel value = 0) may be approximately 22V during the selection phase, with the dark-state reflectance reaching approximately 2.3% at a scan time of 5 seconds, and decreasing with the scan time. Additionally, the voltage amplitude of the AC voltage VSENSE sensed by the ChLC molecule within the specific pixel circuit written with a bright pixel value (e.g., pixel value = 255) may be approximately 32V during the selection phase, with the bright-state reflectance reaching approximately 4% at a scan time of 5 seconds, and increasing with the scan time. Furthermore, the contrast ratio of the bright-state reflectance to the dark-state reflectance reaches approximately 1.6 at a scan time of 5 seconds, and increases with the scan time.

In some embodiments, the second PWM scanning procedure may refer to the conventional PWM scanning procedure (i.e., no additional voltage pulses). The resulting dark-state reflectance, bright-state reflectance, and contrast ratio of the ChLC molecule within the specific pixel circuit versus the scan time are shown by curves 404, 414, and 424 in FIGs. 4A, 4B, and 4C, respectively. For example, the voltage amplitude of the AC voltage VSENSE sensed by the ChLC molecule within the specific pixel circuit written with a dark pixel value (e.g., pixel value = 0) may be approximately 27.8V during the selection phase, with the dark-state reflectance reaching approximately 2.9% at a scan time of 5 seconds and increasing with the scan time. Additionally, the voltage amplitude of the AC voltage VSENSE sensed by the ChLC molecule within the specific pixel circuit written with a bright pixel value (e.g., pixel value = 255) may be approximately 37.8V during the selection phase, with the bright-state reflectance reaching approximately 26.6% at a scan time of 5 seconds and increasing with the scan time from 5 to 6 seconds. Furthermore, the contrast ratio of the bright-state reflectance to the dark-state reflectance reaches approximately 9.6 at a scan time of 5 seconds, increases with the scan time from 5 to 6 seconds, and decreases with the scan time over 6 seconds.

In some embodiments, the third PWM scanning procedure may refer to the proposed PWM scanning procedure within additional voltage pulses (e.g., pulses 301 shown in FIGs. 3A and 3B) applied to the AC pulse of the common voltage VCOM of the activated scanning electrode during the selection phase. The resulting dark-state reflectance, bright-state reflectance, and contrast ratio of the ChLC molecule within the specific pixel circuit versus the scan time are shown by curves 406, 416, and 426 in FIGs. 4A, 4B, and 4C, respectively. For example, the voltage amplitude of the AC voltage VSENSE sensed by the ChLC molecule within the specific pixel circuit written with a dark pixel value (e.g., pixel value = 0) may have two steps of approximately 32V and 22V during the selection phase, with the dark-state reflectance reaching approximately 2.64% at a scan time of 5 seconds and increasing with the scan time. Additionally, the voltage amplitude of the AC voltage VSENSE sensed by the ChLC molecule within the specific pixel circuit written with a bright pixel value (e.g., pixel value = 255) may have two steps of approximately 42V and 32V during the selection phase, with the bright-state reflectance reaching approximately 26% at a scan time of 5 seconds and increasing with the scan time from 5 to 6 seconds. Furthermore, the contrast ratio of the bright-state reflectance to the dark-state reflectance reaches approximately 9.7 at a scan time of 5 seconds, increases with the scan time from 5 to 6 seconds, and decreases with the scan time over 6 seconds.

Specifically, the first PWM scanning procedure has the lowest dark-state reflectance among the first to third PWM scanning procedures, but it has a relatively low bright-state reflectance within a short scan time, resulting in the lowest contrast ratio of the ChLC molecule within the specific pixel circuit on the activated scanning electrode. The second and third PWM scanning procedures have similar bright-state reflectance versus the scan time. However, the third PWM scanning procedure (i.e., the proposed PWM scanning procedure) has a lower dark-state reflectance compared to the second PWM scanning procedure, resulting in the overall contrast ratio of the ChLC molecule of the specific pixel circuit on the activated scanning electrode during the third PWM scanning procedure being 5% to 10% higher than during the second PWM scanning procedure (i.e., the conventional PWM scanning procedure), depending on the scan time and durations of additional voltage pulses.

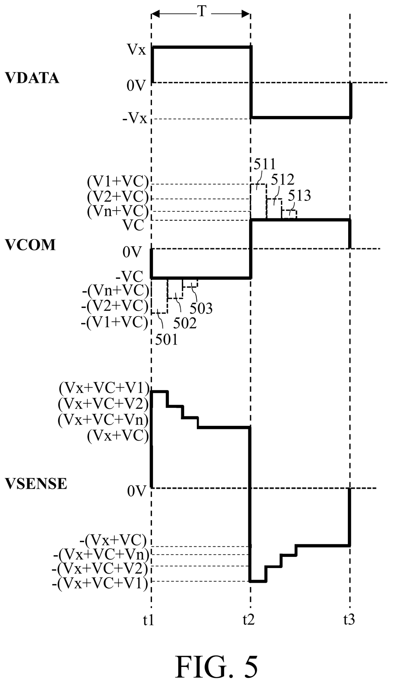

FIG. 5 is a waveform diagram illustrating a data voltage VDATA, common voltage VCOM, and sensed voltage VSENSE for writing a pixel value in accordance with some embodiments of the present disclosure.

For purposes of description and generalization, the voltage amplitude Vx of the data voltage VDATA shown in FIG. 5 corresponds to any of the dark-state pixel value (e.g., pixel value = 0), bright-state value (e.g., pixel value = 255), or grayscale pixel value (e.g., 0 < pixel value < 255), i.e., VD ≤ Vx ≤ VB. In some embodiments, one or more additional voltage pulses, such as voltage pulses 501 to 503 and 511 to 513, with different voltage amplitudes can be added to the negative and positive half cycles of the original AC pulse of the common voltage VCOM with a voltage amplitude VC. For brevity, three additional voltage pulses 501 to 503 and 511 to 513 are added to the negative and positive half cycles of the AC pulse of the common voltage VCOM of the activated scanning electrode, respectively. It should be noted that the number of additional voltage pulses added to the negative and positive half cycles can be adjusted according to practical needs. For example, the voltage pulses 501 and 511 have a voltage amplitude V1, the voltage pulses 502 and 512 have a voltage amplitude V2, and the voltage pulses 503 and 513 have a voltage amplitude Vn. Additionally, the voltage amplitude V1 is greater than the voltage amplitude V2, and the voltage amplitude V2 is greater than the voltage amplitude Vn. In some embodiments, the difference between voltage amplitudes V1 and V2, and the difference between voltage amplitudes V2 and Vn are less than 10V, but the present disclosure is not limited thereto. In some embodiments, the voltage amplitude VC is approximately 10V, and the voltage amplitudes V1, V2, and Vn are approximately 15V, 10V, and 5V, respectively, but the present disclosure is not limited thereto. In other words, the voltage amplitudes of the additional voltage pulses 501 to 503 added to the negative half cycle decrease over time in a plurality of discrete voltage steps, while the voltage amplitudes of the additional voltage pulses 511 to 513 added to the positive half cycle decrease over time in a plurality of discrete voltage steps, as shown in FIG. 5. In some embodiments, the order of additional voltage pulses 501 to 503 can be reversed, and the order of additional voltage pulses 511 to 513 can also be reversed. That is, the additional voltage pulses 503, 502, and 501 added to the negative half cycle are arranged in sequence, while the additional voltage pulses 513, 512, and 511 added to the positive half cycle are also arranged in sequence. In other words, the voltage amplitudes of the additional voltage pulses 503, 502, and 501 added to the negative half cycle may increase over time in a plurality of discrete voltage steps, while the voltage amplitudes of the additional voltage pulses 513, 512, and 511 added to the positive half cycle may increase over time in a plurality of discrete voltage steps.

In some embodiments, the durations of the additional voltage pulses 501 to 503 may occupy respective percentages of the duration T of a half cycle of the AC pulse of the common voltage VCOM, with the durations being equal or different. For purposes of description, the additional voltage pulses 501 to 503 and the remaining portion of the negative half cycle have X%, Y%, Z%, and R% of the duration T, respectively. This indicates that X% + Y% + Z% + R% = 100%, where X, Y, Z are arbitrary numbers between 1 and 99. Similarly, the additional voltage pulses 511 to 513 and the remaining portion of the positive half cycle also have X%, Y%, Z%, and R% of the duration T, respectively. This indicates that X% + Y% + Z% + R% = 100%, where X, Y, Z are arbitrary numbers between 1 and 99.

In some embodiments, the order of the additional voltage pulses 501 to 503 can be rearranged, such as arranging voltage pulses 502, 501, and 503, or voltage pulses 503, 501, and 502 in sequence starting from time t1, and so on. Similarly, the order of the additional voltage pulses 511 to 513 starting from time t2 may correspond to that of the additional voltage pulses 501 to 503.

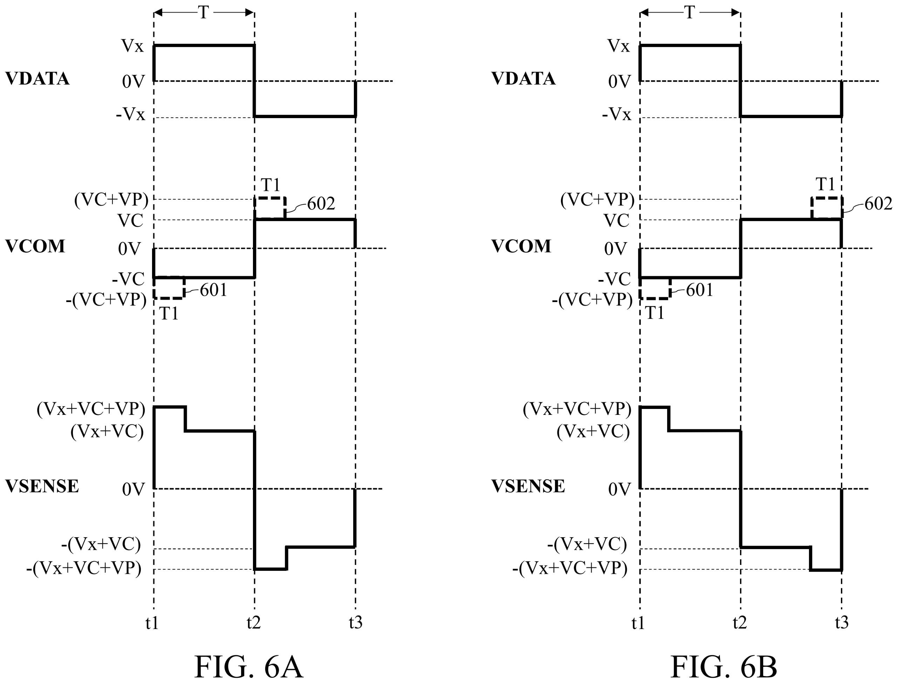

FIGs. 6A to 6D are waveform diagrams illustrating a data voltage VDATA, common voltage VCOM, and sensed voltage VSENSE for writing a pixel value with different arrangements of additional voltage pulses, in accordance with some embodiments of the present disclosure.

For purposes of description and generalization, the voltage amplitude Vx of the data voltage VDATA shown in FIGs. 6A to 6D corresponds to any of the dark-state pixel value (e.g., pixel value = 0), bright-state value (e.g., pixel value = 255), or grayscale pixel value (e.g., 0 < pixel value < 255). In some embodiments, additional voltage pulses 601 and 602, each with a voltage amplitude VP, are added to the negative and positive half cycles within the AC pulse of the common voltage VCOM applied to the activated scanning electrode, respectively, as shown in FIGs. 6A and 6B. The duration T1 of each additional voltage pulses 601 and 602 is equal and is less than the half-cycle duration (e.g., duration T) of an AC pulse of the common voltage VCOM. Referring to FIG. 6A, the additional voltage pulse 601 starts from the beginning (e.g., time t1) of the negative half cycle of the AC pulse of the common voltage VCOM, while the additional voltage pulse 602 starts from the beginning (e.g., time t2) of the positive half cycle of the AC pulse of the common voltage VCOM. Additionally, referring to FIG. 6B, the additional voltage pulse 601 starts from the beginning (e.g., time t1) of the negative half cycle of the AC pulse of the common voltage VCOM, while the additional voltage pulse 602 is arranged immediately before the end (e.g., time t3) of the positive half cycle of the AC pulse of the common voltage VCOM. In other words, there is substantially no time gap between the falling edge of the additional pulse 602 and that of the positive half cycle of the common voltage VCOM, indicating that the falling edge of the additional pulse 602 aligns with that of the positive half cycle of the common voltage VCOM.

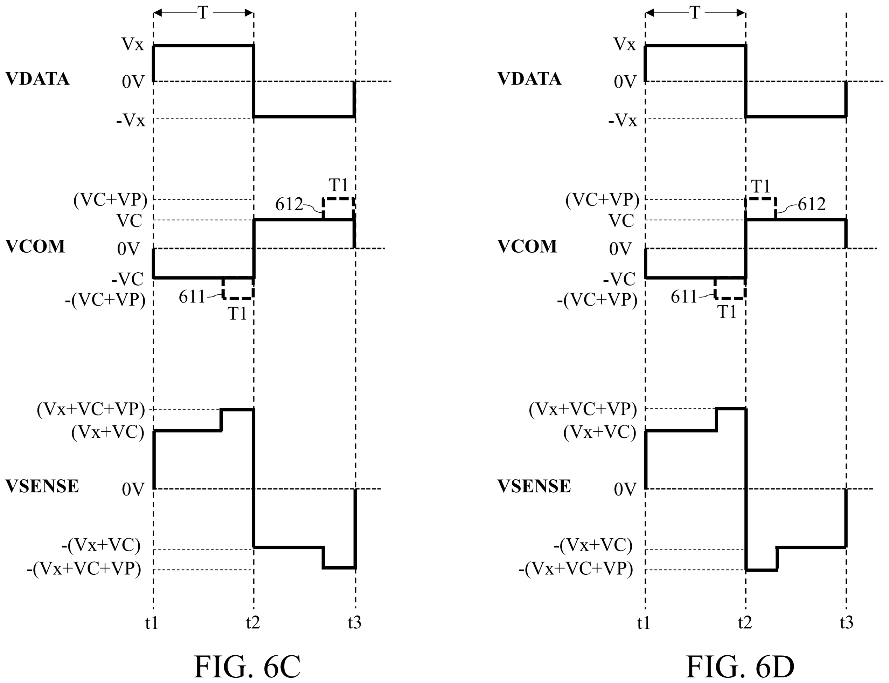

The waveform shown in FIG. 6C may be similar to that in FIG. 6A, with the difference being that the additional voltage pulses 611 and 612 are added to the negative and positive half cycles of the AC pulse of the common voltage VCOM immediately before the ends of the negative and positive half cycles, respectively, as shown in FIG. 6C. In other words, there is substantially no time gap between the rising edge of the additional pulse 611 and that of the negative half cycle of the common voltage VCOM, indicating that the rising edge of the additional pulse 611 aligns with that of the negative half cycle of the common voltage VCOM. Additionally, there is substantially no time gap between the falling edge of the additional pulse 612 and that of the positive half cycle of the common voltage VCOM, indicating that the falling edge of the additional pulse 612 aligns that of the positive half cycle of the common voltage VCOM.

Referring to FIG. 6D, the additional voltage pulse 611 is arranged immediately before the end (e.g., time t2) of the negative half cycle of the AC pulse of the common voltage VCOM, while the additional voltage pulse 612 starts at the beginning (e.g., time t2) of the positive half cycle of the AC pulse of the common voltage VCOM. In FIGS. 6C and 6D, the duration T1 of each additional voltage pulses 611 and 612 is equal, which is less than the half-cycle duration (e.g., duration T) of an AC pulse of the common voltage VCOM.

Specifically, based on the embodiments of FIGs. 6A to 6D, there may be two voltage steps within both the negative and positive half cycles: one with a greater voltage amplitude and another with a lower voltage amplitude. The negative half cycle can start with either the greater voltage amplitude followed by the lower voltage amplitude, or the lower voltage amplitude followed by the greater voltage amplitude. Similarly, the positive half cycle can start with either the greater voltage amplitude followed by the lower voltage amplitude, or vice versa.

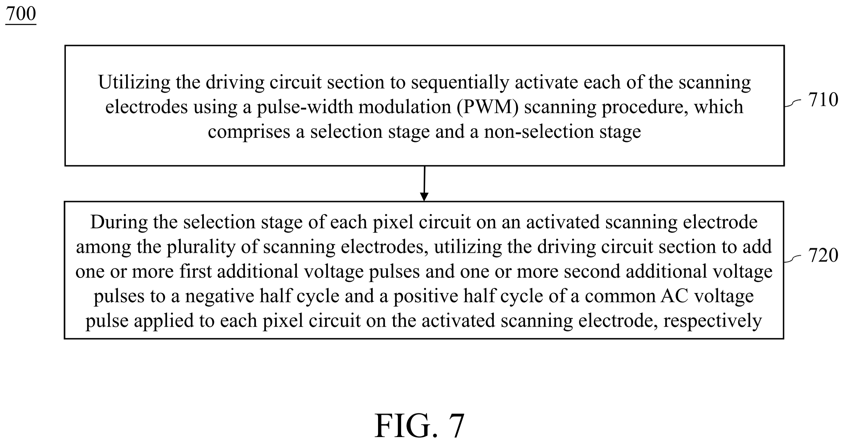

FIG. 7 is a flowchart of a method for driving a cholesteric liquid-crystal display device in accordance with some embodiments of the present disclosure. Please refer to both FIG. 1 and FIG. 7. Method 700 includes steps 710 and 720.

Step 710: utilizing the driving circuit section to sequentially activate each of the scanning electrodes using a pulse-width modulation (PWM) scanning procedure, which comprises a selection stage and a non-selection stage. In some embodiments, the selection stage in the PWM scanning procedure includes additional voltage pulses added to the negative half cycle and positive half cycle of the common AC voltage pulse, compared to the selection stage in the conventional PWM scanning procedure.

Step 720: during the selection stage of each pixel circuit of an activated scanning electrode among the plurality of scanning electrodes, utilizing the driving circuit section to add one or more first additional voltage pulses and one or more second additional voltage pulses to a negative half cycle and a positive half cycle of a common AC voltage pulse applied to each pixel circuit on the activated scanning electrode, respectively. For example, there are various ways to arrange the one or more first additional voltage pulses and the one or more second additional voltage pulses to the negative half cycle and the positive half cycle of the common AC voltage pulse, the details of which can be referred to the embodiments of FIGS. 3A to 3B, FIG. 5, and FIGS. 6A to 6D.

In view of the above, using the proposed PWM scanning procedure and method for driving the cholesteric liquid-crystal display device, additional pulses added to the negative and positive half cycles of the original AC pulse of the common voltage VCOM can increase the voltage amplitude thereof. This expedites the pixel writing process, enabling the specific pixel circuit to achieve the expected bright pixel value more quickly or achieve a higher bright pixel value with increased reflectance of the ChLC molecule within a predefined duration, compared to the selection phase of the conventional PWM scanning procedure. Furthermore, the overall contrast ratio of the ChLC molecules on the activated scanning electrode during the proposed PWM scanning procedure is 5% to 10% higher than during the conventional procedure, thereby improving the user's experience.

While the present disclosure has been described with reference to specific embodiments, it is evident that many alternatives, modifications, and variations may be apparent to those skilled in the art. For example, various components of the embodiments may be interchanged, added, or substituted in other embodiments. Also, all of the elements of each figure are not necessary for operation of the disclosed embodiments. For example, one of ordinary skill in the art of the disclosed embodiments would be able to make and use the teachings of the present disclosure by simply employing the elements of the independent claims. Accordingly, embodiments of the present disclosure as set forth herein are intended to be illustrative, not limiting. Various changes may be made without departing from the spirit and scope of the present disclosure.

Even though numerous characteristics and advantages of the present disclosure have been set forth in the foregoing description, together with details of the structure and function of the invention, the disclosure is illustrative only. Changes may be made to details, especially in matters of shape, size, and arrangement of parts, within the principles of the invention to the full extent indicated by the broad general meaning of the terms in which the appended claims are expressed.

## Claims

1. A display device, comprising:
a cholesteric liquid-crystal display panel, comprising:
a first substrate on which a plurality of scanning electrodes extending in a first direction are formed;
a second substrate on which a plurality of data electrodes extending in a second direction different from the first direction are formed;
a cholesteric liquid-crystal layer formed between the first substrate and the second substrate; and
a driving circuit section, configured to apply a plurality of alternating-current (AC) voltage pulses to pixel circuits at intersections between the scanning electrodes and the data electrodes,
wherein the driving circuit section is configured to sequentially activate each of the scanning electrodes using a pulse-width modulation (PWM) scanning procedure, which comprises a selection stage and a non-selection stage,
wherein during the selection stage of each pixel circuit on an activated scanning electrode among the plurality of scanning electrodes, the driving circuit section is configured to add one or more first additional voltage pulses and one or more second additional voltage pulses to a negative half cycle and a positive half cycle of a common AC voltage pulse applied to each pixel circuit on the activated scanning electrode, respectively.

2. The display device of Claim 1, wherein a number of the one or more first additional voltage pulses equals a number of the one or more second additional voltage pulses.

3. The display device of Claim 2, wherein
voltage amplitudes of the one or more first additional voltage pulses added to the negative half cycle correspond to voltage amplitudes of the one or more second additional voltage pulses added to the positive half cycle in sequence.

4. The display device of Claim 3, wherein:
the one or more first additional voltage pulses are consecutively added to the negative half cycle; and
the one or more second additional voltage pulses are consecutively added to the positive half cycle.

5. The display device in any of Claims 1 to 4, wherein:
the voltage amplitudes of the one or more first additional voltage pulses added to the negative half cycle decrease over time in a plurality of discrete voltage steps; and
the voltage amplitudes of the one or more second additional voltage pulses added to the positive half cycle decrease over time in the plurality of discrete voltage steps.

6. The display device in any of Claims 1 to 4, wherein:
the voltage amplitudes of the one or more first additional voltage pulses added to the negative half cycle increase over time in a plurality of discrete voltage steps; and
the voltage amplitudes of the one or more second additional voltage pulses added to the positive half cycle increase over time in the plurality of discrete voltage steps.

7. The display device in any of Claims 1 to 6, wherein the one or more first additional voltage pulses added to the negative half cycle start from a beginning of the negative half cycle or are arranged immediately before an end of the negative half cycle.

8. The display device in any of Claims 1 to 7, wherein the one or more second additional voltage pulses added to the positive half cycle start from a beginning of the positive half cycle or are arranged immediately before an end of the positive half cycle.

9. A method for driving a cholesteric liquid-crystal display device, wherein the cholesteric liquid-crystal display device comprises a cholesteric liquid-crystal display panel and a driving circuit section, and the cholesteric liquid-crystal display panel comprises a plurality of scanning electrodes and a plurality of data electrodes, the method comprising:
utilizing the driving circuit section to sequentially activate each of the scanning electrodes using a pulse-width modulation (PWM) scanning procedure, which comprises a selection stage and a non-selection stage; and
during the selection stage of each pixel circuit on an activated scanning electrode among the plurality of scanning electrodes, utilizing the driving circuit section to add one or more first additional voltage pulses and one or more second additional voltage pulses to a negative half cycle and a positive half cycle of a common AC voltage pulse applied to each pixel circuit on the activated scanning electrode, respectively.

10. The method of Claim 9, wherein a number of the one or more first additional voltage pulses equals a number of the one or more second additional voltage pulses.

11. The method in any of Claims 9 to 10, wherein:
voltage amplitudes of the one or more first additional voltage pulses added to the negative half cycle correspond to voltage amplitudes of the one or more second additional voltage pulses added to the positive half cycle in sequence;
the one or more first additional voltage pulses added to the negative half cycle are consecutively arranged; and
the one or more second additional voltage pulses added to the positive half cycle are consecutively arranged.

12. The method in any of Claims 9 to 11, wherein:
the voltage amplitudes of the one or more first additional voltage pulses added to the negative half cycle decrease over time in a plurality of discrete voltage steps; and
the voltage amplitudes of the one or more second additional voltage pulses added to the positive half cycle decrease over time in the plurality of discrete voltage steps.

13. The method in any of Claims 9 to 11, wherein:
the voltage amplitudes of the one or more first additional voltage pulses added to the negative half cycle increase over time in a plurality of discrete voltage steps; and
the voltage amplitudes of the one or more second additional voltage pulses added to the positive half cycle increase over time in the plurality of discrete voltage steps.

14. The method in any of Claims 9 to 13, wherein the one or more first additional voltage pulses added to the negative half cycle start from a beginning of the negative half cycle or are arranged immediately before an end of the negative half cycle.

15. The method in any of Claims 9 to 14, wherein the one or more second additional voltage pulses added to the positive half cycle start from a beginning of the positive half cycle or are arranged immediately before an end of the positive half cycle.
